(19) Europäisches Patentamt / European Patent Office / Office européen des brevets

(11) EP 4 328 328 A1

(12) EUROPEAN PATENT APPLICATION
published in accordance with Art. 153(4) EPC

(43) Date of publication:
28.02.2024 Bulletin 2024/09

(51) International Patent Classification (IPC):
C21B 5/00 (2006.01)     C21B 7/24 (2006.01)

(21) Application number: 22832513.0

(52) Cooperative Patent Classification (CPC):
C21B 5/00; C21B 7/24

(22) Date of filing: 25.03.2022

(86) International application number:
PCT/JP2022/014446

(87) International publication number:
WO 2023/276352 (05.01.2023 Gazette 2023/01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 28.06.2021 JP 2021106363

(71) Applicant: JFE Steel Corporation
Tokyo 100-0011 (JP)

(72) Inventors:
• ICHIKAWA, Kazuhira
  Tokyo 100-0011 (JP)
• YAMAMOTO, Tetsuya
  Tokyo 100-0011 (JP)
• SATO, Takeshi
  Tokyo 100-0011 (JP)
• KAWASHIRI, Yuki
  Tokyo 100-0011 (JP)

(74) Representative: Hoffmann Eitle
Patent- und Rechtsanwälte PartmbB
Arabellastraße 30
81925 München (DE)

(54) **SUPPLIED HEAT QUANTITY ESTIMATION METHOD, SUPPLIED HEAT QUANTITY ESTIMATION APPARATUS, SUPPLIED HEAT QUANTITY ESTIMATION PROGRAM, AND METHOD FOR OPERATING BLAST FURNACE**

(57) A supply heat quantity estimating method according to the present invention is a method of estimating a quantity of heat supplied to pig iron in a blast furnace from a quantity of heat supplied into the blast furnace and a production speed of molten iron in the blast furnace, the supply heat quantity estimating method including: an estimating step of estimating a change in carried-out sensible heat by in-furnace passing gas and a change in carried-in sensible heat supplied by a raw material preheated by the in-furnace passing gas and estimating a quantity of heat supplied to the pig iron in the blast furnace in consideration of the changes in the carried-out sensible heat and the carried-in sensible heat that have been estimated, in which the estimating step includes: a step of estimating the carried-out sensible heat in consideration of the quantity of heat released to an outside of the blast furnace by a slip and estimating the change in the carried-in sensible heat in consideration of a change in a surface height of the raw material by the slip; and a step of estimating a quantity of heat held in a deadman coke present in the blast furnace and estimating the quantity of heat supplied to the pig iron in the blast furnace in consideration of the quantity of heat held in the deadman coke that has been estimated.

FIG.2

**Description**

Field

The present invention relates to a supply heat quantity estimating method, a supply heat quantity estimating device, a supply heat quantity estimating program, and a blast furnace operating method for estimating the quantity of heat supplied to pig iron in a blast furnace.

Background

Generally, in order to stably operate a blast furnace, it is necessary to maintain the molten iron temperature within a predetermined range. Specifically, when the molten iron temperature becomes low, the viscosity of the molten iron and slag generated together with the molten iron increases, and it becomes difficult to discharge the molten iron or the slag from a tap hole. On the other hand, when the molten iron temperature becomes high, the Si concentration in the molten iron increases, and the viscosity of the molten iron increases, and thus there is a high risk that the molten iron sticks to a tuyere and melts the tuyere. Therefore, in order to stably operate a blast furnace, it is necessary to suppress the fluctuation of the molten iron temperature. From such a background, various methods for estimating the quantity of heat supplied into a blast furnace or the molten iron temperature are proposed. Specifically, Patent Literature 1 discloses a furnace heat controlling method for a blast furnace, in which the molten iron temperature after a specific period of time is sequentially estimated from a displacement amount in a furnace heat index at the current time from a furnace heat index reference level corresponding to a target molten iron temperature, a displacement amount in a descending speed at the current time from a descending speed reference level of a furnace top corresponding to the target molten iron temperature, and time of influence of both of the displacement amounts to the molten iron temperature, and furnace heat control operation is performed so as to reduce fluctuations in the molten iron temperature based on the estimation result. In addition, Patent Literature 2 discloses a molten iron temperature estimating method for a blast furnace for estimating a future molten iron temperature based on operation data including an actual value of blast condition data including at least one of a blast temperature, a blast humidity, a blast volume, a pulverized coal blowing amount, or an oxygen enrichment amount in the blast furnace, an actual value of disturbance factor data including at least a solution loss carbon amount, and an actual value of the molten iron temperature, the method including: a data accumulation step of accumulating the operation data; a stationary state estimation model constructing step of constructing a stationary state estimation model for estimating a molten iron temperature in a stationary state from the operation data in the stationary state accumulated in the data accumulation step; a non-stationary state estimation model constructing step of constructing a non-stationary state estimation model for estimating a molten iron temperature in a non-stationary state from the operation data in the non-stationary state accumulated in the data accumulation step, the non-stationary state estimation model obtained by reducing dimensions of the stationary state estimation model; and a molten iron temperature estimating step of estimating a molten iron temperature from the stationary state estimation model and the non-stationary state estimation model that have been constructed.

Citation List

Patent Literature

   Patent Literature 1: JP H02-115311 A
   Patent Literature 2: JP 2008-144265 A

Summary

Technical Problem

The timing at which the molten iron temperature is highly likely to greatly fluctuate is when the quantity of molten iron produced changes due to a change in the rate of operation such as the blast volume in a blast furnace, and the quantity of pig iron changes with respect to the quantity of heat supplied into the blast furnace. In particular, the molten iron temperature greatly fluctuates when a so-called slip occurs in which the raw material stops descending due to the force of gas pushing up the raw material in the blast furnace exceeding the descending force of the raw material and then the height of the raw material surface rapidly drops when this relationship is canceled. However, since the method described in Patent Literature 1 does not take into consideration factors such as carried-out sensible heat by blast sensible heat, which is considered to change due to an increase or decrease in the rate of operation, it is not possible to accurately estimate the quantity of heat supplied to pig iron when the rate of operation is greatly changed. In addition, in the method described in Patent Literature 2, it is conceivable that the estimation accuracy of the molten iron temperature decreases when an operation change that has not been accumulated previously is performed. In addition, in a case where the estimation accuracy of the molten iron temperature is low as described above, there are many cases where the heat is excessively supplied, which brings about concerns about equipment trouble. Meanwhile, excessive use of a reducing material, which is a carbon source, is not preferable also from the perspective of reducing carbon dioxide emissions.

The present invention has been made in view of the above disadvantages, and an object of the present invention is to provide a supply heat quantity estimating method, a supply heat quantity estimating device, and a supply heat quantity estimating program capable of accurately estimating the quantity of heat supplied to pig iron in a blast furnace even when the rate of operation greatly changes and, especially, when a slip occurs. Another object of the present invention is to provide a blast furnace operating method capable of accurately controlling the molten iron temperature within a predetermined range while maintaining the quantity of heat supplied to the pig iron in the blast furnace to an appropriate amount even when the rate of operation greatly changes and, especially, when a slip occurs.

Solution to Problem

A supply heat quantity estimating method according to the present invention estimates a quantity of heat supplied to pig iron in a blast furnace from a quantity of heat supplied into the blast furnace and a production speed of molten iron in the blast furnace, and includes: an estimating step of estimating a change in carried-out sensible heat by in-furnace passing gas and a change in carried-in sensible heat supplied by a raw material preheated by the in-furnace passing gas, and estimating a quantity of heat supplied to the pig iron in the blast furnace in consideration of the changes in the carried-out sensible heat and the carried-in sensible heat that have been estimated, wherein the estimating step includes: a step of estimating the carried-out sensible heat in consideration of the quantity of heat released to an outside of the blast furnace by a slip, and estimating the change in the carried-in sensible heat in consideration of a change in a surface height of the raw material by the slip; and a step of estimating a quantity of heat held in a deadman coke present in the blast furnace, and estimating the quantity of heat supplied to the pig iron in the blast furnace in consideration of the quantity of heat held in the deadman coke that has been estimated.

Moreover, the estimating step may include a step of estimating the carried-out sensible heat in consideration of the quantity of heat released to the outside of the blast furnace by the slip by calculating a multiplied value by multiplying specific heat of furnace top gas by a difference between a furnace top gas temperature and a reference temperature of the furnace top gas temperature and adding a value obtained by dividing the multiplied value by an ironmaking speed to the carried-out sensible heat.

Moreover, the estimating step may include a step of estimating the change in the carried-in sensible heat in consideration of the change in the surface height of the raw material due to the slip by obtaining a raw material temperature as a function of an integrated value of a difference between an estimated value and an actual value of the surface height of the raw material.

A supply heat quantity estimating device according to the present invention estimates a quantity of heat supplied to pig iron in a blast furnace from a quantity of heat supplied into the blast furnace and a production speed of molten iron in the blast furnace, and includes: an estimating unit configured to estimate a change in carried-out sensible heat by in-furnace passing gas and a change in carried-in sensible heat supplied by a raw material preheated by the in-furnace passing gas, and estimate a quantity of heat supplied to the pig iron in the blast furnace in consideration of the changes in the carried-out sensible heat and the carried-in sensible heat that have been estimated, wherein the estimating unit is configured to estimate the carried-out sensible heat in consideration of the quantity of heat released to an outside of the blast furnace by a slip, estimate the change in the carried-in sensible heat in consideration of a change in a surface height of the raw material by the slip, estimate a quantity of heat held in a deadman coke present in the blast furnace, and estimate the quantity of heat supplied to the pig iron in the blast furnace in consideration of the quantity of heat held in the deadman coke that has been estimated.

A supply heat quantity estimating program according to the present invention causes a computer to execute a process of estimating a quantity of heat supplied to pig iron in a blast furnace from a quantity of heat supplied into the blast furnace and a production speed of molten iron in the blast furnace, the supply heat quantity estimating program causing the computer to execute an estimating process of: estimating a change in carried-out sensible heat by in-furnace passing gas and a change in carried-in sensible heat supplied by a raw material preheated by the in-furnace passing gas and estimating a quantity of heat supplied to the pig iron in the blast furnace in consideration of the changes in the carried-out sensible heat and the carried-in sensible heat that have been estimated, wherein the estimating process includes: estimating the carried-out sensible heat in consideration of the quantity of heat released to an outside of the blast furnace by a slip, estimating the change in the carried-in sensible heat in consideration of a change in a surface height of the raw material by the slip, estimating a quantity of heat held in a deadman coke present in the blast furnace, and estimating the quantity of heat supplied to the pig iron in the blast furnace in consideration of the quantity of heat held in the deadman coke that has been estimated.

A blast furnace operating method according to the present invention includes: a step of controlling the quantity of heat supplied into the blast furnace based on the quantity of heat supplied to the pig iron in the blast furnace estimated by the supply heat quantity estimating method according to the present invention.

Advantageous Effects of Invention

According to a supply heat quantity estimating method, a supply heat quantity estimating device, and a supply heat quantity estimating program according to the present invention, it is possible to accurately estimate the quantity of heat supplied to pig iron in a blast furnace even when the rate of operation greatly changes and, especially, when a slip occurs. In addition, according to a blast furnace operating method according to the present invention, it is possible to maintain the quantity of heat supplied to the pig iron in the blast furnace to an appropriate amount and to accurately control the molten iron temperature within a predetermined range even when the rate of operation greatly changes and, especially, when a slip occurs.

Brief Description of Drawings

FIG. 1 is a block diagram illustrating a configuration of a furnace heat controlling device according to an embodiment of the present invention.
FIG. 2 is a flowchart illustrating a flow of a furnace heat controlling process as an embodiment of the present invention.
FIG. 3 is a diagram illustrating an example of relationships between an index of the related art and a temperature difference from a reference molten iron temperature and between the furnace heat index of the present invention and the temperature difference from the reference molten iron temperature.

Description of Embodiments

Hereinafter, a configuration and operation of a furnace heat controlling device as an embodiment of the present invention to which a supply heat quantity estimating method and a supply heat quantity estimating device according to the present invention are applied will be described with reference to the drawings.

[Configuration]

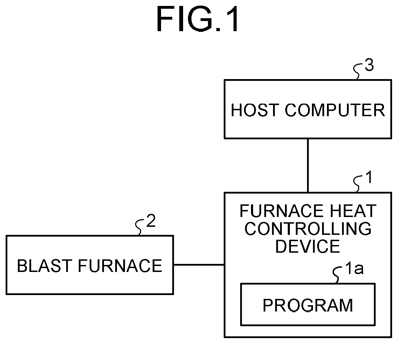

First, with reference to FIG. 1, the configuration of the furnace heat controlling device as an embodiment of the present invention will be described. FIG. 1 is a block diagram illustrating the configuration of the furnace heat controlling device as an embodiment of the present invention. As illustrated in FIG. 1, a furnace heat controlling device 1 according to an embodiment of the present invention includes an information processing device, such as a computer, and controls the temperature of molten iron produced in a blast furnace 2 within a predetermined range by controlling the quantity of heat supplied to the melt iron in the blast furnace 2 from a tuyere provided in a lower portion of the blast furnace 2. The furnace heat controlling device 1 functions as a supply heat quantity estimating device according to the present invention.

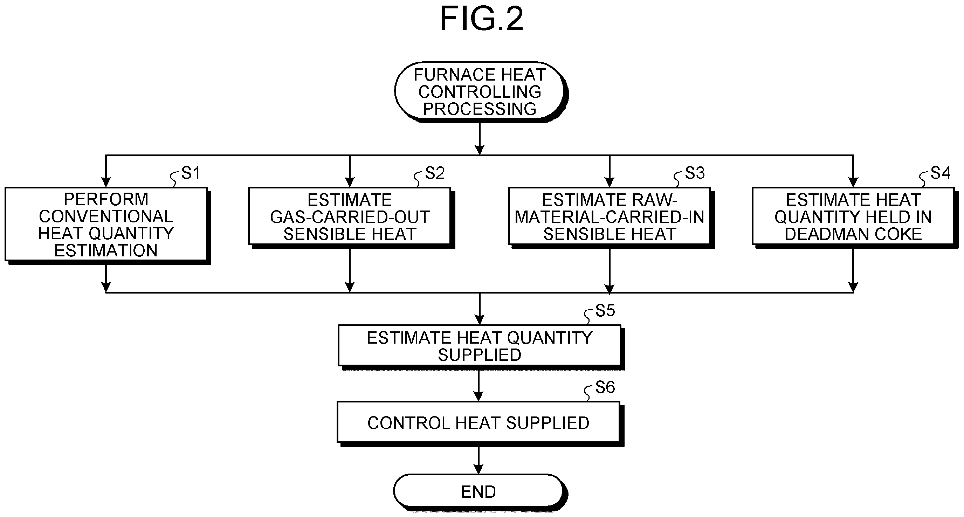

The furnace heat controlling device 1 having such a configuration accurately estimates the quantity of heat supplied to pig iron in the blast furnace 2 even when the rate of operation of the blast furnace 2 greatly changes and, especially, when a slip occurs, by execution of the furnace heat controlling process described below, maintains the quantity of heat supplied to the pig iron in the blast furnace 2 at an appropriate amount using the estimation result, and accurately controls the molten iron temperature within the predetermined range. Hereinafter, a flow of the furnace heat controlling process as an embodiment of the present invention will be described with reference to FIG. 2.

The operation of the furnace heat controlling device 1 described below is implemented by an arithmetic processing device, such as a CPU in the information processing device included in the furnace heat controlling device 1, loading a program 1a from a storage unit such as a ROM to a temporary storage unit such as a RAM and executing the program 1a that has been loaded. The program 1a may be provided by being recorded in a computer-readable recording medium such as a CD-ROM, a flexible disk, a CD-R, or a DVD as a file in an installable format or an executable format. The program 1a may be stored in a computer connected to a network such as a telecommunication line such as the Internet, a telephone communication network such as a mobile phone, or a wireless communication network such as WiFi (registered trademark), and provided by being downloaded via the network.

[Furnace Heat Controlling Process]

FIG. 2 is a flowchart illustrating a flow of the furnace heat controlling process as the embodiment of the present invention. The flowchart illustrated in FIG. 2 starts at the timing when an execution command of the furnace heat controlling process is input to the furnace heat controlling device 1, and in the furnace heat controlling process, in addition to the process of step S1 of estimating the quantity of heat supplied into the blast furnace with reaction heat balance (exothermic reaction heat and endothermic reaction heat), blast sensible heat, a heat loss (e.g. amount of heat removed from the furnace body), and others in the blast furnace that is performed in the related art, processes of step S2, step S3, and step S4 is further performed, and the flow proceeds to a process of step S5 of estimating the supply heat quantity by integrating these steps. The process of step S1 of estimating the quantity of heat supplied into the blast furnace with reaction heat balance (exothermic reaction heat and endothermic reaction heat), blast sensible heat, a heat loss (e.g. amount of heat removed from the furnace body), and others in the blast furnace is performed in the related art, and the supply heat quantity at this point is denoted as $Q_0$. A preferred example of the processing in step S1 will be described later.

In the process of step S2, the furnace heat controlling device 1 estimates sensible heat (gas-carried-out sensible heat) $Q_7$ carried out to an upper portion of the blast furnace 2 by gas (in-furnace passing gas) passing from a lower portion to the upper portion of the blast furnace 2. Specifically, the gas-carried-out sensible heat $Q_7$ (MJ/t-p: amount of heat per ton of pig iron. Hereinafter, t-p represents pig iron tonnage) can be calculated by (1) calculating a first multiplied value by multiplying a temperature difference between an estimated temperature (theoretical combustion temperature) of gas combusted in front of a tuyere and a reference temperature representing the temperature at an upper end of the lower portion of the blast furnace by the specific heat of the gas, (2) calculating a second multiplied value by multiplying the specific heat of furnace top gas by a difference between the furnace top gas temperature (temperature of furnace top exhaust gas) and a reference temperature of the furnace top gas temperature, and (3) dividing a value obtained by adding the first multiplied value and the second multiplied value by an ironmaking speed, and this is expressed by the following Equation (1). By dividing the value obtained by adding the first multiplied value and the second multiplied value by the ironmaking speed, it is possible to accurately evaluate the gas-carried-out sensible heat $Q_7$ in consideration of the quantity of heat released to the outside of the furnace without exchanging heat with the raw material by a slip. As a result, the process of step S2 is completed, and the flow proceeds to the process of step S5.

$$Q_7 = \left[ \alpha_{bosh} \cdot \left\{ \sum (C_{bosh,i} \cdot V_{bosh,i}) \right\} \cdot (TFT - T_{base}) + \alpha_{top} \cdot \left\{ \sum (C_{top,i} \cdot V_{top,i}) \right\} \cdot (T_{top} - T_{top,base}) \right] \cdot \frac{1}{Pig} \qquad \cdots (1)$$

Where $C_{bosh,i}$ denotes the specific heat (MJ/m³/°C) of a gas species i (nitrogen, carbon monoxide, and hydrogen) in the in-furnace passing gas (Bosch gas), $C_{top,i}$ denotes the specific heat (MJ/m³/°C) of a gas species i (nitrogen, carbon monoxide, carbon dioxide, hydrogen, and water vapor) in the furnace top gas, $V_{bosh,i}$ denotes the flow rate (m³(s.t.p)/min) (m³(s.t.p): volume at 0°C and 1 atm (atmospheric pressure)) of the gas species i in the in-furnace passing gas, $V_{top,i}$ denotes the flow rate (m³ (s.t.p)/min) of the gas species i in the furnace top gas, TFT denotes the theoretical combustion temperature (°C), $T_{base}$ denotes the reference temperature (°C) (800 to 1200°C, preferably 900 to 1000°C), $T_{top}$ denotes the furnace top gas temperature (°C), $T_{top,base}$ denotes the reference temperature (°C) of the furnace top gas temperature (80 to 300°C, preferably 100 to 200°C), Pig denotes the ironmaking speed (t-p/min), and $\alpha_{bosh}$ and $\alpha_{top}$ denote influence coefficients that are modified depending on the blast furnace 2. These values can be acquired from a host computer 3 such as a process computer connected to the furnace heat controlling device 1 via a telecommunication line, for example.

In the process of step S3, the furnace heat controlling device 1 estimates sensible heat (raw-material-carried-in sensible heat) $Q_8$ carried in to the lower portion of the blast furnace 2 by a raw material supplied from the upper portion to the lower portion of the blast furnace 2. Specifically, the material-carried-in sensible heat $Q_8$ (MJ/t-p) can be calculated by multiplying a temperature difference between the raw material temperature $T_1$ (= 1450 to 1500°C) at a lower end of a cohesive zone and a reference temperature $T_{base}$ by the specific heat of the raw material as expressed by the following Equation (2). Note that the raw material temperature $T_1$ is a function of the differential value of the difference $\Delta L_{surface}$ between the estimated value and the actual value of the raw material surface height as in Equation (3) below. According to the setting of the raw material temperature $T_1$, it is possible to consider that the raw material temperature $T_1$ decreases depending on the magnitude of the surface height of the raw material that has slipped, and thus it is possible to accurately evaluate a decrease in the quantity of heat carried into the lower part of the furnace by the raw material that is not heated well due to a slip.

Specifically, in a normal operation situation, since the volumes of the raw material and the coke in the blast furnace decrease depending on the ironmaking speed, the surface height of a packed bed of the raw material in the blast furnace decreases. Here, the surface height of the packed bed of the raw material is measured using a sensor, and an operation of replenishing the raw material and the coke to bring the surface height of the packed bed of the raw material to the original height is repeatedly performed each time the surface height of the packed bed of the raw material descends to a predetermined height. Meanwhile, immediately before the slip occurs, the volume of the raw material in the blast furnace itself decreases depending on the ironmaking speed, however, the descent of the raw material is inhibited at a certain position, and thus the surface height of the packed bed of the raw material is constant or only slightly descends. Therefore, by always obtaining the difference $\Delta L_{surface}$ between the surface height of the packed bed of the raw material estimated from the ironmaking speed and a sensor measurement value, since a change amount $d\Delta L_{surface}/dt$ when the difference is rapidly reduced represents the slip amount, and the influence of the raw material not heated well due to the slip can be evaluated depending on the magnitude of the quantity of the slip. It is also possible to perform similar evaluation by always simply measuring the amount of change in the surface height of the packed bed of the raw material and deeming that a slip has occurred when the amount exceeds a threshold value. Note that, in a case where there is a plurality of measurement directions of the surface height of the packed bed of the raw material, similar evaluation may be performed for each of the measurement directions, and the influence may be proportionally obtained depending on the ratio of the measurement direction in which the slip has occurred, or the slip may be evaluated using the average value of the measurement directions. As a result, the process of step S3 is completed, and the flow proceeds to the process of step S5.

$$Q_8 = \beta \cdot \left\{ \sum \left( C_j \cdot R_j \right) \right\} \cdot \left( T_1 - T_{base} \right) \qquad \cdots (2)$$

Here, $C_j$ denotes the specific heat (MJ/kg/°C) of a raw material j (coke, pig iron, and slag), $R_j$ denotes an intensity (kg/t-p) of the raw material j, $T_1$ denotes the raw material temperature (°C) at the lower end of the cohesive zone, $T_{base}$ denotes the reference temperature (°C), and $\beta$ denotes an influence coefficient modified depending on the blast furnace 2. These values can be acquired from, for example, the host computer 3.

$$T_1 = f\left( d\Delta L_{surface} / dt \right) \qquad \cdots (3)$$

In the process of step S4, the furnace heat controlling device 1 estimates the quantity of heat (coke holding heat quantity) $Q_9$ held in the deadman coke present in the lower portion of the blast furnace 2. Specifically, the coke holding heat quantity $Q_9$ (MJ/t-p) can be obtained by multiplying a value obtained by subtracting a combustion consumption amount and a carbon amount discharged as dust from the coke intensity per ton of molten iron by a difference between a reference temperature and a theoretical combustion temperature and the specific heat $C_{coke}$ of coke and is expressed by the following Equation (4). As a result, the process of step S4 is completed, and the flow proceeds to the process of step S5.

$$Q_9 = \gamma \cdot C_{Coke} \cdot \left( \delta \cdot TFT - T_{base} \right)$$
$$\cdot \left\{ CR - \frac{(CR_{burn} - PCR \cdot C_{inPC}) + C_{sol} + Dust \cdot C_{indust}}{0.88} \right\} \qquad \cdots (4)$$

Incidentally, $C_{coke}$ denotes the specific heat of coke (MJ/kg/°C), TFT denotes the theoretical combustion temperature (°C), $T_{base}$ denotes the reference temperature (°C), CR denotes a coke ratio (kg/t-p), $CR_{burn}$ denotes a combustion carbon ratio in front of the tuyere (amount of oxygen consumed in front of the tuyere by blown oxygen and humidification) (kg/t-p), PCR denotes a pulverized coal ratio (kg/t-p), $C_{inPC}$ denotes a carbon ratio in pulverized coal, $C_{sol}$ denotes a solution loss carbon ratio (kg/t-p), Dust denotes a dust ratio (kg/t-p), $C_{indust}$ denotes a carbon ratio in dust, and $\gamma$ and $\delta$ denote influence coefficients modified depending on the blast furnace 2. These values can be acquired from, for example, the host computer 3.

In the process of step S5, the furnace heat controlling device 1 estimates the quantity of heat supplied to the pig iron in the blast furnace 2 using the supply heat quantity $Q_0$ estimated in the process of step S1, the gas-carried-out sensible heat $Q_7$ estimated in the processes of steps S2 to S4, the material-carried-in sensible heat $Q_8$, and the coke holding heat quantity $Q_9$. Specifically, the furnace heat controlling device 1 calculates a furnace heat index $T_Q$ (MJ/t-p) corresponding to the quantity of heat supplied to the pig iron in the blast furnace 2 by substituting the supply heat quantity $Q_0$ estimated in step S1, the gas-carried-out sensible heat $Q_7$ estimated in the process of steps S2 to S4, the material-carried-in sensible heat $Q_8$, and the coke holding heat quantity $Q_9$ into the following Equation (5). As a result, the process of step S5 is completed, and the flow proceeds to the process of step S6.

$$T_Q = Q_0 - Q_7 + Q_8 - Q_9 \qquad \cdots (5)$$

Incidentally, $Q_0$ denotes the quantity of heat supplied into the blast furnace by the reaction heat balance (exothermic reaction heat and endothermic reaction heat), the blast sensible heat, the heat loss (e.g. the quantity of heat removed from the furnace body), and others in the blast furnace, and an estimation method adopted in many cases in the supply heat quantity estimation of the related art can be applied. As a preferable approach, Equation (6) is conceivable.

$$Q_0 = Q_1 + Q_2 - Q_3 - Q_4 - Q_5 - Q_6 \qquad \cdots (6)$$

Incidentally, $Q_1$ denotes the combustion heat (MJ/t-p) of coke at the tip of the tuyere. The combustion heat $Q_1$ can be calculated by dividing a calorific value due to combustion of coke calculated from the amount of oxygen blown from the tuyere to the blast furnace per unit time by the amount of molten pig iron produced in the unit time.

Meanwhile, $Q_2$ denotes blast sensible heat (MJ/t-p) supplied to the blast furnace by the blast from the tuyere. The blast sensible heat $Q_2$ can be calculated by obtaining the quantity of heat input to the blast furnace by blast per unit time from the blast volume per unit time and a measured value of the blast temperature and dividing this value by the amount of molten pig iron produced in the unit time.

In addition, $Q_3$ denotes solution loss reaction heat (MJ/t-p). For this value, for example, as described in Patent Literature 1, the reaction heat can be calculated by obtaining the solution loss carbon amount from component values of the furnace top gas. The solution loss reaction heat $Q_3$ can be calculated by dividing the solution loss reaction heat by the amount of molten pig iron produced in the unit time.

Meanwhile, $Q_4$ denotes heat of decomposition (MJ/t-p) of moisture contained mainly in the blast. The heat of decomposition $Q_4$ can be calculated by dividing the heat of decomposition obtained from a measurement value of the blown moisture by the amount of molten pig iron produced in the unit time.

In addition, $Q_5$ denotes a heat loss (for example, the quantity of heat removed by cooling water) from the furnace body (MJ/t-p). In a case where the quantity of heat removed by cooling water is calculated as the heat loss, the quantity of heat removed $Q_5$ can be calculated by calculating the quantity of heat removed by the cooling water per unit time from the amount of the cooling water and a temperature difference between an inlet side and an outlet side of the cooling water of the blast furnace body and dividing the calculated amount of heat removed by the amount of molten pig iron produced in the unit time.

$Q_6$ denotes the heat of decomposition (MJ/t-p) of a reducing material blown from the tuyere per unit time. The heat of decomposition $Q_6$ can be calculated by dividing the heat of decomposition by the amount of molten pig iron produced in the unit time.

In the process of step S6, the furnace heat controlling device 1 controls the quantity of heat supplied from the tuyere into the blast furnace 2 based on the quantity of heat supplied to the pig iron in the blast furnace 2 estimated in the process of step S5, thereby maintaining the quantity of heat supplied to the pig iron in the blast furnace 2 at an appropriate amount and controlling the molten iron temperature within a predetermined range. As a result, the process of step S6 is completed, and a series of furnace heat controlling process ends.

As is apparent from the above description, in the furnace heat controlling process according to the embodiment of the present invention, the furnace heat controlling device 1 estimates a change in carried-out sensible heat to the upper portion of the blast furnace by the in-furnace passing gas and a change in carried-in sensible heat supplied to the lower portion of the blast furnace by the raw material preheated by the in-furnace passing gas and estimates the quantity of heat supplied to the pig iron in the blast furnace in consideration of the estimated changes in the carried-out sensible heat and carried-in sensible heat. In addition, the furnace heat controlling device 1 estimates the carried-out sensible heat in consideration of the quantity of heat released to the outside of the blast furnace by the slip, estimates the change in the carried-in sensible heat in consideration of the change in the surface height of the raw material by the slip, estimates the quantity of heat held in the deadman coke present in the blast furnace, and estimates the quantity of heat supplied to the pig iron in the blast furnace in consideration of the estimated amount of heat held in the deadman coke. This makes it possible to accurately estimate the quantity of heat supplied to the pig iron in the blast furnace even when the rate of operation such as the blast volume to the blast furnace greatly changes and, especially, when a slip occurs. In addition, this makes it possible to maintain the quantity of heat supplied to the pig iron in the blast furnace to an appropriate amount and to accurately control the molten iron temperature within a predetermined range even when the rate of operation greatly changes and, especially, when a slip occurs.

[Example]

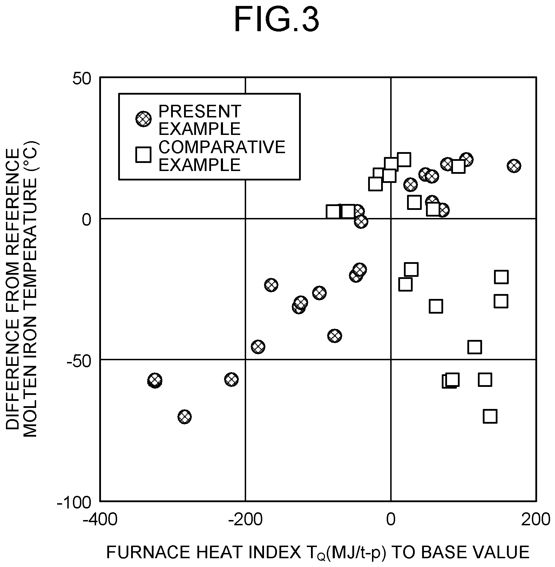

Illustrated in FIG. 3 are results of comparison between each of the furnace heat index of the related art (estimated by $Q_1$ to $Q_6$) and the furnace heat index of the present invention (estimated by $Q_1$ to $Q_9$) at timing when a slip has occurred with the actual molten iron temperature (difference from the reference molten iron temperature). As illustrated in FIG. 3, in the furnace heat index of the present invention (present example), a certain correlation between the furnace heat index and the molten iron temperature (difference from the reference molten iron temperature) can be confirmed as compared with the furnace heat index of the related art (comparative example). In addition, shown in Table 1 is a summary of standard deviations of the difference between the estimated molten iron temperature and the actual molten iron temperature in the cases where the factors of each example are taken into consideration. It can be seen that the estimation accuracy is improved in the case where the slip is considered (present example, in which the furnace heat index is estimated using $Q_1$ to $Q_9$) as compared with the case where the furnace heat index is estimated using only $Q_1$ to $Q_6$ as the furnace heat index of the related art (comparative example). As a result, it can be seen that, by using the furnace heat index of the present invention, it possible to maintain the quantity of heat supplied to the pig iron in the blast furnace to an appropriate amount and to accurately control the molten iron temperature within a predetermined range even when the rate of operation greatly changes and, especially, when a slip occurs.

Table 1

| | Comparative example | Present example |
|---|---|---|
| Index considered | $Q_1$ to $Q_6$ | $Q_1$ to $Q_9$ |
| Standard deviation of actual molten iron temperature relative to estimated molten iron temperature | 47.9 | 12.7 |

Although the embodiments applied with the invention made by the present inventors have been described above, the present invention is not limited by the description and the drawings included as a part of the disclosure of the present invention according to the embodiments. That is, other embodiments, examples, operation technology, and the like implemented by those skilled in the art based on the present embodiments are all included in the scope of the invention.

Industrial Applicability

According to the present invention, it is possible to provide a supply heat quantity estimating method, a supply heat quantity estimating device, and a supply heat quantity estimating program capable of accurately estimating the quantity of heat supplied to pig iron in a blast furnace even when the rate of operation greatly changes and, especially, when a slip occurs. Another object of the present invention is to provide a blast furnace operating method capable of accurately controlling the molten iron temperature within a predetermined range while maintaining the quantity of heat supplied to the pig iron in the blast furnace to an appropriate amount even when the rate of operation greatly changes and, especially, when a slip occurs.

Reference Signs List

1    FURNACE HEAT CONTROLLING DEVICE
1a   PROGRAM
2    BLAST FURNACE
3    HOST COMPUTER

**Claims**

1. A supply heat quantity estimating method of estimating a quantity of heat supplied to pig iron in a blast furnace from a quantity of heat supplied into the blast furnace and a production speed of molten iron in the blast furnace, the supply heat quantity estimating method comprising:

an estimating step of estimating a change in carried-out sensible heat by in-furnace passing gas and a change in carried-in sensible heat supplied by a raw material preheated by the in-furnace passing gas, and estimating a quantity of heat supplied to the pig iron in the blast furnace in consideration of the changes in the carried-out sensible heat and the carried-in sensible heat that have been estimated,

wherein the estimating step includes:

a step of estimating the carried-out sensible heat in consideration of the quantity of heat released to an outside of the blast furnace by a slip, and estimating the change in the carried-in sensible heat in consideration of a change in a surface height of the raw material by the slip; and

a step of estimating a quantity of heat held in a deadman coke present in the blast furnace, and estimating the quantity of heat supplied to the pig iron in the blast furnace in consideration of the quantity of heat held in the deadman coke that has been estimated.

2. The supply heat quantity estimating method according to claim 1, wherein the estimating step includes a step of estimating the carried-out sensible heat in consideration of the quantity of heat released to the outside of the blast furnace by the slip by calculating a multiplied value by multiplying specific heat of furnace top gas by a difference between a furnace top gas temperature and a reference temperature of the furnace top gas temperature and adding a value obtained by dividing the multiplied value by an ironmaking speed to the carried-out sensible heat.

3. The supply heat quantity estimating method according to claim 1 or 2, wherein the estimating step includes a step of estimating the change in the carried-in sensible heat in consideration of the change in the surface height of the raw material due to the slip by obtaining a raw material temperature as a function of an integrated value of a difference between an estimated value and an actual value of the surface height of the raw material.

4. A supply heat quantity estimating device for estimating a quantity of heat supplied to pig iron in a blast furnace from a quantity of heat supplied into the blast furnace and a production speed of molten iron in the blast furnace, the supply heat quantity estimating device comprising:

an estimating unit configured to

estimate a change in carried-out sensible heat by in-furnace passing gas and a change in carried-in sensible heat supplied by a raw material preheated by the in-furnace passing gas, and
estimate a quantity of heat supplied to the pig iron in the blast furnace in consideration of the changes in the carried-out sensible heat and the carried-in sensible heat that have been estimated,

wherein the estimating unit is configured to

estimate the carried-out sensible heat in consideration of the quantity of heat released to an outside of the blast furnace by a slip,
estimate the change in the carried-in sensible heat in consideration of a change in a surface height of the raw material by the slip,
estimate a quantity of heat held in a deadman coke present in the blast furnace, and
estimate the quantity of heat supplied to the pig iron in the blast furnace in consideration of the quantity of heat held in the deadman coke that has been estimated.

5. A supply heat quantity estimating program for causing a computer to execute a process of estimating a quantity of heat supplied to pig iron in a blast furnace from a quantity of heat supplied into the blast furnace and a production speed of molten iron in the blast furnace, the supply heat quantity estimating program causing the computer to execute an estimating process of:

estimating a change in carried-out sensible heat by in-furnace passing gas and a change in carried-in sensible heat supplied by a raw material preheated by the in-furnace passing gas and estimating a quantity of heat supplied to the pig iron in the blast furnace in consideration of the changes in the carried-out sensible heat and the carried-in sensible heat that have been estimated,

wherein the estimating process includes:

estimating the carried-out sensible heat in consideration of the quantity of heat released to an outside of the blast furnace by a slip,

estimating the change in the carried-in sensible heat in consideration of a change in a surface height of the raw material by the slip,
estimating a quantity of heat held in a deadman coke present in the blast furnace, and
estimating the quantity of heat supplied to the pig iron in the blast furnace in consideration of the quantity of heat held in the deadman coke that has been estimated.

6. A blast furnace operating method comprising:
a step of controlling the quantity of heat supplied into the blast furnace based on the quantity of heat supplied to the pig iron in the blast furnace estimated by the supply heat quantity estimating method according to any one of claims 1 to 3.

# FIG.1

# FIG.2

```
        ┌─────────────────┐
        │  FURNACE HEAT   │
        │   CONTROLLING   │
        │   PROCESSING    │
        └────────┬────────┘
                 │
    ┌────────┬───┴────┬────────┐
    ▼S1      ▼S2      ▼S3      ▼S4
```

| PERFORM CONVENTIONAL HEAT QUANTITY ESTIMATION | ESTIMATE GAS-CARRIED-OUT SENSIBLE HEAT | ESTIMATE RAW-MATERIAL-CARRIED-IN SENSIBLE HEAT | ESTIMATE HEAT QUANTITY HELD IN DEADMAN COKE |

S5 — ESTIMATE HEAT QUANTITY SUPPLIED

S6 — CONTROL HEAT SUPPLIED

END

EP 4 328 328 A1

# FIG.3

## INTERNATIONAL SEARCH REPORT

| International application No. |
| --- |
| **PCT/JP2022/014446** |

| A. | CLASSIFICATION OF SUBJECT MATTER |
| --- | --- |

*C21B 5/00*(2006.01)i; *C21B 7/24*(2006.01)i
FI: C21B5/00 310; C21B7/24

According to International Patent Classification (IPC) or to both national classification and IPC

| B. | FIELDS SEARCHED |
| --- | --- |

Minimum documentation searched (classification system followed by classification symbols)

C21B5/00; C21B7/24

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2018-145520 A (JFE STEEL CORP) 20 September 2018 (2018-09-20)<br>entire text | 1-6 |
| A | 羽田野道春　他,溶銑温度制御のための高炉数式モデル, 鉄と鋼, 01 March 1981, 67th (1981), no. 3, pp. 518-527<br>entire text, (HATANO, Michiharu et al. A Mathematical Model of Blast Furnace for Control of Hot Metal Temperature. Tetsu-to-Hagane.) | 1-6 |
| A | JP 2001-348604 A (KOBE STEEL LTD) 18 December 2001 (2001-12-18)<br>entire text | 1-6 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **12 May 2022** | **24 May 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/014446**

| Patent document cited in search report | | | Publication date (day/month/year) | Patent family member(s) | Publication date (day/month/year) |
|---|---|---|---|---|---|
| JP | 2018-145520 | A | 20 September 2018 | (Family: none) | |
| JP | 2001-348604 | A | 18 December 2001 | (Family: none) | |

Form PCT/ISA/210 (patent family annex) (January 2015)

**EP 4 328 328 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H02115311 A
- JP 2008144265 A